# FASCICULE DE BREVET EUROPEEN

(11) **EP 1 248 029 B1**
(45) Date de publication et mention de la délivrance du brevet: **16.11.2005**
(21) Numéro de dépôt: 02356061.8
(22) Date de dépôt: 02.04.2002
(51) Int. Cl.: F16L 37/42, F16L 37/084

(54) **Raccord rapide pour la jonction amovible de deux canalisations, et son utilisation**
Schnellkupplung für die lösbare Verbindung zweier Rohrleitungen und ihre Verwendung
Quick acting coupling for the disconnectable connection of two pipelines and its use

(30) Priorité: 03.04.2001 FR 0104513
(43) Date de publication de la demande: 09.10.2002
(73) Titulaire: STAUBLI FAVERGES, 74210 Faverges (FR)
(72) Inventeur: Lacroix, Jean-Jacques, 74330 Lovagny (FR); Pavan, André, 74210 Faverges (FR)
(74) Mandataire: Schouller, Jean-Philippe

(56) Documents cités:
- EP-A- 0 077 743
- EP-A- 0 800 031
- EP-A- 1 182 391
- US-A- 1 869 411
- US-A- 2 777 716

## Description

La présente invention concerne un raccord rapide pour la jonction amovible de deux canalisations.

Elle vise plus particulièrement un tel raccord permettant de mettre en communication fluidique un réservoir amont d'oxygène, avec une conduite aval de distribution de ce gaz.

De manière classique, ce raccord comprend un élément amont, constituant habituellement la partie femelle de ce raccord, qui est connecté au réservoir de ce gaz, ainsi qu'un élément aval, constituant habituellement la partie mâle du raccord, qui est connecté à la conduite de distribution. Ces deux éléments amont et aval sont propres à être emmanchés axialement, ce qui provoque alors l'ouverture d'un clapet monté coulissant dans le corps de l'élément amont, de manière à assurer le libre passage du fluide.

La partie femelle du raccord rapide est équipée d'un verrou chargé, monté à coulissement dans le corps de cette partie femelle, transversalement à la direction de déplacement du clapet. Ce corps est percé d'une partie centrale destinée à l'emmanchement de l'élément mâle, et il est en outre prévu au moins un joint d'étanchéité en matière élastomère ou plastique, disposé au voisinage du clapet.

Ce raccord rapide connu, décrit notamment dans EP-A-0 077 743, présente cependant un inconvénient.

En effet, lorsque le gaz véhiculé est soumis à des élévations brutales de pression, il se produit une inflammation des joints disposés au voisinage du clapet de l'élément amont. Ceci est préjudiciable à l'intégrité mécanique du raccord et nuit donc à son utilisation correcte. De surcroît, l'inflammation des joints provoque parfois la combustion de l'ensemble du raccord, ce qui peut être à l'origine d'accidents graves, étant donné la présence d'oxygène.

Afin de pallier cet inconvénient, l'invention se propose de réaliser un raccord rapide qui, tout en assurant une jonction fiable entre les deux canalisations qui lui sont connectées, soit particulièrement robuste, en particulier en termes de résistance à l'inflammation, quelles que soient les conditions opératoires auxquelles est soumis ce raccord.

A cet effet, elle a pour objet un raccord rapide selon la revendication 1 annexée.

L'invention a également pour objet l'utilisation de ce raccord, pour le transport d'oxygène.

L'invention va être décrite ci-dessous, en référence aux dessins annexés, donnés uniquement à titre d'exemples non limitatifs et dans lesquels :
- La figure 1 est une vue en coupe longitudinale, illustrant les éléments amont et aval, mutuellement désolidarisés, d'un raccord rapide conforme à l'invention ; et
- La figure 2 est une vue analogue à la figure 1, illustrant les éléments du raccord de la figure 1, une fois solidarisés l'un à l'autre.

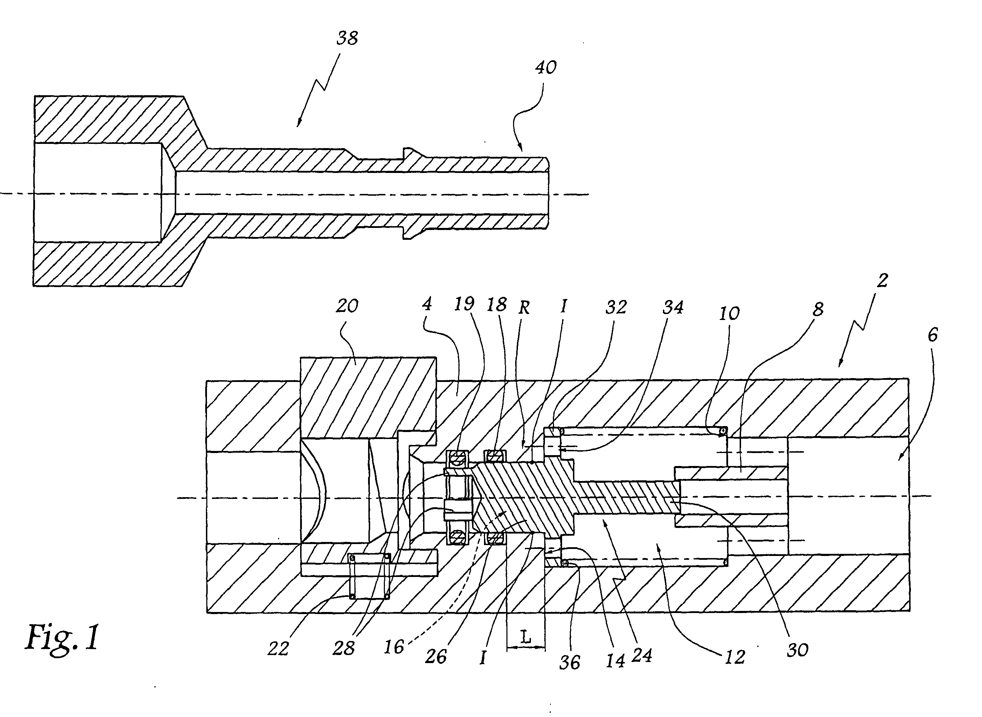

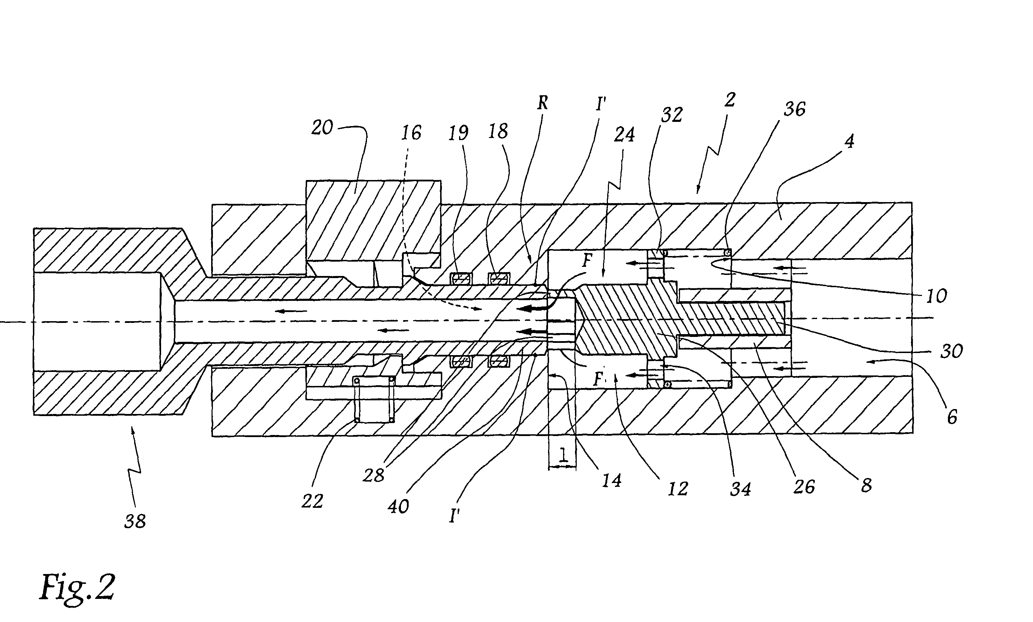

Le raccord rapide, représenté sur les figures 1 et 2, comprend un élément amont, désigné dans son ensemble par la référence 2, qui constitue la partie femelle de ce raccord. Cet élément amont est connecté de façon classique à une installation non représentée, délivrant de l'oxygène à une haute pression, par exemple voisine de 200 bars.

Cet élément amont 2 comprend un corps tubulaire 4, qui délimite une enceinte 6, destinée à être mise en communication avec l'installation d'oxygène précitée. Cette enceinte amont 6 reçoit un fourreau 8 rapporté, au sein duquel un clapet est susceptible de coulisser, comme cela sera décrit plus en détail dans ce qui suit.

Ce fourreau 8 forme un rebord périphérique 10, au-delà duquel s'étend une chambre 12. Cette dernière est mise en communication, par l'intermédiaire d'un épaulement rentrant 14, avec un logement 16 cylindrique, dont le diamètre, ou dimension transversale, est inférieur à celui de la chambre 12 précitée. Les parois de ce logement 16 sont creusées de gorges, recevant deux joints toriques 18 et 19, disposés l'un derrière l'autre selon le sens d'écoulement du gaz.

Par ailleurs, le corps 4 est muni, dans sa partie aval, d'un verrou 20 monté à coulissement, à l'encontre d'un ressort 22. Ce verrou permet la fixation amovible d'un élément aval du raccord, comme cela sera décrit dans ce qui suit.

Un clapet 24 est monté de façon coulissante dans le volume intérieur de l'élément amont 2. Il comprend un corps cylindrique 26 prolongé, à une première extrémité, par plusieurs doigts axiaux 28 délimitant des passages intercalaires. Une queue 30, qui s'étend à partir du corps 26, à l'opposé des doigts 28, est libre de coulisser dans le volume intérieur du fourreau 8.

Par ailleurs, ce clapet 24 est pourvu d'une couronne radiale 32 creusée de perçages 34. Un ressort 36, venant en butée à une première de ses extrémités contre le rebord 10, permet de ramener cette couronne 32 contre l'épaulement 14 de l'élément amont 2.

Le raccord rapide, représenté sur les figures 1 et 2, comprend également un élément aval, formant la partie mâle du raccord. L'agencement de cet élément aval 38, ainsi que son mode de fixation à l'élément amont 2, par l'intermédiaire du verrou 20, sont de type classique. L'extrémité libre annulaire de cet élément aval 38 est affectée de la référence 40.

Dans la position illustrée à la figure 1, les éléments amont 2 et aval 38 sont désolidarisés. De la sorte, le clapet est repoussé par le ressort 22 vers l'aval, en référence à l'écoulement du gaz. Dans cet agencement, la couronne 32 prend appui contre l'épaulement 14. Dans cette position de la figure 1, dite de fermeture, le joint 18 assure l'étanchéité entre le clapet 24 et le corps 4 de l'élément amont 2.

Le corps 26 du clapet 24, reçu dans le logement 16, est placé en regard d'une région intermédiaire R, qui borde ce logement 16 et se trouve située entre le joint amont 18 et l'épaulement 14. Cette région intermédiaire est réalisée sous forme massive, en ce sens qu'elle possède des dimensions transversales suffisantes pour que, du fait de sa nature métallique, elle garantisse une dissipation calorifique efficace. Cette région R possède une dimension longitudinale, ou longueur L, qui est significative.

Les sections transversales de la région intermédiaire R et du corps 26, qui correspondent aux diamètres respectivement intérieur et extérieur de ces éléments, sont tels que ces derniers forment un intervalle annulaire de section réduite, assurant une étanchéité primaire.

Cet intervalle, désigné par la référence I, possède une section transversale faible, correspondant au jeu entre le corps 26 et la région R en regard. Ce jeu correspond à des tolérances d'usinage classiques, et autorise un coulissement aisé du clapet dans son logement.

En service, la montée en pression dans la chambre 12 crée une élévation de température brutale. Cette élévation brutale est toutefois inexistante au voisinage des joints, grâce à l'étanchéité primaire assurée par l'intervalle I. En effet, la quantité de gaz s'écoulant dans cet intervalle I est faible et subit un refroidissement rapide, la région intermédiaire R ainsi que le corps 26 en regard du clapet constituant des parties métalliques massives qui permettent une dispersion calorifique efficace.

En conséquence, les joints 18 et 19 ne sont que faiblement échauffés et ne risquent pas de s'enflammer.

Dans la position illustrée à la figure 2, les éléments amont 2 et aval 38 sont solidarisés l'un de l'autre. Dans cet agencement, les doigts 28 du clapet 24 se trouvent en appui contre la paroi frontale de l'extrémité annulaire 40 de l'élément aval 38. Ces doigts 28 sont disposés en amont de l'épaulement 14, de sorte que le gaz est libre de s'écouler en direction du logement 16, par les perçages 34 et les passages intercalaires ménagés entre ces doigts 28. Dans cette position de la figure 2, dite d'ouverture, le joint 18 assure l'étanchéité entre l'élément aval 38 et le corps 4 de l'élément amont 2.

Dans la position d'ouverture de la figure 2, la région intermédiaire R est en regard de l'extrémité annulaire 40 de l'élément aval 38. Leurs sections transversales, qui correspondent aux diamètres respectivement intérieur de cette région R et extérieur de cette extrémité 40, sont telles que ces derniers forment un intervalle annulaire I' de passage du gaz. Cet intervalle I' possède une dimension transversale analogue à celle de l'intervalle I précédemment décrit, formé par coopération du clapet 24 et de la région R.

Lors de montées brutales de la pression du gaz dans la chambre 12, dans cette position d'ouverture du clapet, l'élévation brutale de température qui en découle est inexistante au voisinage des joints, grâce à l'intervalle I' qui assure une étanchéité primaire.

En conséquence, de façon analogue à ce qui se produit dans la position de fermeture du clapet, les joints 18 et 19 ne sont sensiblement pas sujets à une élévation de leur température, de sorte qu'ils ne risquent pas de s'enflammer.

Il est avantageux que la longueur L de la région intermédiaire R soit supérieure à la longueur 1 des doigts 28. En effet, cette mesure permet de maintenir, en regard de la région R, soit une partie de l'extrémité annulaire 40, soit une partie du corps 26, quelles que soient les positions axiales de l'élément aval et du clapet 24. De la sorte, lors de la translation du clapet 24, sous l'action de l'élément aval 38, il existe en permanence une portion d'intervalle annulaire, de faible section, protégeant les joints 18 et 19 de la montée en pression brutale de l'oxygène.

L'invention a été décrite en référence à des éléments amont et aval, formant respectivement des parties femelle et mâle du raccord. Elle trouve également son application à un raccord, dont les éléments amont et aval forment des parties respectivement mâle et femelle.

L'invention permet de réaliser les objectifs précédemment mentionnés. En effet, la Demanderesse a constaté que les phénomènes d'inflammation, auxquels sont soumis les joints, sont principalement dûs à des montées brutales de la pression de l'oxygène s'écoulant au voisinage de ces joints, induisant une température considérable.

L'existence des zones d'étanchéité primaire I et I' permet de dissiper l'énergie que possède ce gaz, une fois qu'il arrive au contact des joints. Ainsi, ces derniers ne sont soumis que dans une très faible mesure à une élévation de température, de sorte que leur intégrité mécanique n'est pas remise en cause.

## Revendications

1. Raccord rapide pour la jonction amovible de deux canalisations parcourues par de l'oxygène, comprenant un élément amont (2) femelle, comprenant des moyens de connexion à une canalisation amont d'arrivée du gaz sous pression, et un élément aval (38), mâle, propres à être emmanchés axialement l'un dans l'autre en provoquant l'ouverture d'un clapet (24) monté dans un corps (4) de l'élément amont, ledit clapet (24) étant mobile entre une position d'ouverture, dans laquelle les éléments amont (2) et aval (38) sont accouplés, et une position de fermeture, dans laquelle les éléments amont et aval sont dissociés, ledit élément amont étant pourvu d'au moins un joint (18) d'étanchéité, en élastomère ou en matière plastique, disposé au voisinage dudit clapet, le ou chaque joint d'étanchéité (18) assurant, dans la position de fermeture, l'étanchéité entre le clapet (24) et le corps (4) de l'élément amont (2) et, dans la position d'ouverture, l'étanchéité entre l'élément aval (38) et le corps (4) de l'élément amont, **caractérisé en ce que** ce raccord comprend des moyens (R, 26, 40) de formation, à la fois dans les positions d'ouverture et de fermeture, de zones (I, I') d'étanchéité primaires qui s'étendent en amont du ou de chaque joint (18), ces zones (I, I') possédant des dimensions adaptées pour induire une diminution significative du débit de gaz s'écoulant en direction du ou de chaque joint, afin de limiter l'échauffement du ou de chaque joint.

2. Raccord suivant la revendication 1, **caractérisé en ce que** lesdites zones définissent des intervalles de passage du gaz (I, I') possédant une dimension longitudinale (L) substantiellement supérieure à leur dimension transversale.

3. Raccord suivant l'une des revendications 1 ou 2, **caractérisé en ce que** les moyens de formation de la zone d'étanchéité primaire (I), dans la position de fermeture, comprennent une région massive (R) de l'élément amont (2), disposée immédiatement en amont du ou de chaque joint (18), ainsi qu'un corps (26) du clapet (24) en regard de ladite région massive (R).

4. Raccord suivant la revendication 3, **caractérisé en ce que** les moyens de formation de la zone d'étanchéité primaire (I'), dans la position d'ouverture, comprennent ladite région massive (R), ainsi qu'une extrémité (40) de l'élément aval (38).

5. Raccord suivant la revendication 3 ou 4, **caractérisé en ce que** ladite région massive (R) délimite un logement (16) de réception du clapet, mis en communication avec une zone (12) de haute pression du gaz dont les dimensions transversales sont substantiellement supérieures à celles desdits intervalles (I, I').

6. Raccord suivant la revendication 5, **caractérisé en ce que** le logement (16) et la zone de haute pression (12) délimitent un épaulement périphérique (14), apte à recevoir en butée une couronne (32) dudit clapet (24).

7. Raccord suivant l'une quelconque des revendications 5 ou 6, **caractérisé en ce que** le ou chaque joint (18) est disposé dans des parois du logement (16) de réception du clapet.

8. Utilisation d'un raccord conforme à l'une quelconque des revendications précédentes, pour le transport d'oxygène.

## Patentansprüche

1. Schnellkupplung für die lösbare Verbindung von zwei Leitungen, die von Sauerstoff durchströmt werden, umfassend: ein stromaufwärtiges Aufnahmeelement (2), das Mittel zum Anschließen an eine stromaufwärts gelegene Zufuhrleitung des unter Druck stehenden Gases umfasst, und ein stromabwärts gelegenes Einsteckelement (38), die geeignet sind, axial ineinander gesteckt zu werden, wobei die Öffnung eines Ventils (24) hervorgerufen wird, das in einem Körper (4) des stromaufwärtigen Elements montiert ist, wobei das Ventil (24) zwischen einer Offenstellung, in der das stromaufwärtige (2) und das stromabwärtige (38) Element gekuppelt sind, und einer Schließstellung, in der das stromaufwärtige und das stromabwärtige Element getrennt sind, beweglich ist, wobei das stromaufwärtige Element mit mindestens einer Dichtung (18) aus einem Elastomer oder einem Kunststoff versehen ist, das in der Nähe des Ventils angeordnet ist, wobei die oder jede Dichtung (18) in der Schließstellung die Dichtigkeit zwischen dem Ventil (24) und dem Körper (4) des stromaufwärtigen Elements (2) und in der Offenstellung die Dichtigkeit zwischen dem stromabwärtigen Element (38) und dem Körper (4) des stromaufwärtigen Element sicherstellt, **dadurch gekennzeichnet, dass** diese Kupplung Mittel (R, 26, 40) zur in der Offen- und Schließstellung gleichzeitigen Bildung von Hauptdichtungszonen (I,I') umfasst, die sich stromaufwärts zu der oder jeder Dichtung (18) erstrecken, wobei diese Zonen (I,I') angepasste Abmessungen besitzen, um eine merkbare Verringerung des Durchflusses des Gases zu induzieren, das in Richtung der oder jeder Dichtung strömt, um die Erwärmung der oder jeder Dichtung zu begrenzen.

2. Kupplung nach Anspruch 1, **dadurch gekennzeichnet, dass** die Zonen Bereiche (I, I') für den Durchgang des Gases definieren, die eine Längsabmessung (L) aufweisen, die substantiell größer ist als ihre Querabmessung.

3. Kupplung nach einem der Ansprüche 1 oder 2, **dadurch gekennzeichnet, dass** die Mittel zur Bildung der Hauptdichtungszone (I) in der Schließstellung ein massives Gebiet (R) des stromaufwärtigen Elementes (2), das direkt stromaufwärts zu der oder jeder Dichtung (18) liegt, sowie einen Körper (26) des Ventils (24) gegenüberstehend zum massiven Gebiet (R) aufweisen.

4. Kupplung nach Anspruch 3, **dadurch gekennzeichnet, dass** die Mittel zur Bildung der Hauptdichtungszone (I') in der Offenstellung das massive Gebiet (R) sowie ein Ende (40)des stromabwärtigen Elementes (38) umfassen.

5. Kupplung nach Anspruch 3 oder 4, **dadurch gekennzeichnet, dass** das massive Gebiet (R) einen Aufnahmeraum (16) für das Ventil begrenzt, der mit einer Zone (12) hohen Drucks des Gases in Verbindung gesetzt ist, deren Querabmessungen substantiell größer sind als die der Bereiche (I, I').

6. Kupplung nach Anspruch 5, **dadurch gekennzeichnet, dass** der Aufnahmeraum (16) der Zone (12) hohen Drucks eine Umfangsschulter (14) begrenzen, die geeignet ist, als Anschlag einen Kranz (32) des Ventils (24) aufzunehmen.

7. Kupplung nach einem Beliebigen der Ansprüche 5 oder 6, **dadurch gekennzeichnet, dass** die oder jede Dichtung (18) in Wänden des Aufnahmeraums (16) des Ventils angeordnet sind.

8. Verwendung einer Kupplung nach einem beliebigen der vorhergehenden Ansprüche für den Transport von Sauerstoff.

## Claims

1. Quick-acting coupling for the detachable connection of two pipelines carrying oxygen, comprising a female upstream element (2) comprising means of connection to an upstream pipeline for the supply of gas under pressure, and a male downstream element (38), the elements being capable of being inserted axially one into another causing the opening of a shutter (24) mounted in a body (4) of the upstream element, the shutter (24) being movable between an open position in which the upstream element (2) and downstream element (38) are coupled, and a closed position in which the upstream and downstream elements are disconnected, the upstream element being provided with at least one sealing-tight joint (18) composed of elastomer or plastics material, disposed in the vicinity of the shutter, the or each sealing-tight joint (18) ensuring in its closed position sealing-tightness between the shutter (24) and the body (4) of the upstream element (2), and in the open position sealing-tightness between the downstream element (38) and the body (4) of the upstream element, **characterised in that** the coupling comprises means (R, 26, 40) of forming both in the open and closed positions primary sealing zones (I, I') which extend upstream from the or each joint (18), these zones (I, I') having dimensions adapted to bring about a significant decrease in the flow of gas passing in the direction of the or each joint in order to limit the heating of the or each joint.

2. Coupling according to claim 1, **characterised in that** the zones define gaps for the passage of the gas (I, I') having a longitudinal dimension (L) substantially higher than their transverse dimension.

3. Coupling according to either of claims 1 or 2, **characterised in that** the means of forming the primary sealing zone (I) in the closed position comprise a solid region (R) of the upstream element (2), disposed immediately upstream of the or each joint (18), as well as a body (26) of the shutter (24) opposite the solid region (R).

4. Coupling according to claim 3, **characterised in that** the means of forming the primary sealing zone (I') in the open position comprise the solid region (R) as well as an end (40) of the downstream element (38).

5. Coupling according to claim 3 or 4, **characterised in that** the solid region (R) defines a housing (16) for receiving the shutter placed in communication with a high-pressure zone (12) of the gas whose transverse dimensions are substantially greater than those of the gaps (I, I').

6. Coupling according to claim 5, **characterised in that** the housing (16) and the high-pressure zone (12) define a peripheral shoulder (14) capable of receiving in abutment a crown (32) of the shutter (24).

7. Coupling according to either of claims 5 or 6, **characterised in that** the or each joint (18) is disposed in walls of the housing (16) for receiving the shutter.

8. Use of a coupling according to any one of the preceding claims for the transport of oxygen.
